# EUROPEAN PATENT SPECIFICATION

(11) **EP 2 754 526 B1**
(45) Date of publication and mention of the grant of the patent: **17.08.2022**
(21) Application number: 12832732.7
(22) Date of filing: 05.12.2012
(51) Int. Cl.: B23K 26/08, B23K 26/14, B23K 26/40, B23K 26/38

(54) **LASER SYSTEM FOR CUTTING WINDOWS IN SECURITY PAPER**
LASERSCHNEIDVORRICHTUNG ZUR HERSTELLUNG EINES FENSTERS IN EINEM SICHERHEITSPAPIER
SYSTÈME LASER POUR DÉCOUPAGE DE FENÊTRES DANS UN PAPIER DE SÉCURITÉ

(43) Date of publication of application: 16.07.2014
(73) Proprietor: Pasaban, S.A., 20400 Tolosa (Guipúzcoa) (ES)
(72) Inventor: OTANO, Javier, 20400 Tolosa (ES)
(74) Representative: Balder IP Law, S.L.
(86) International application number: PCT/ES2012/070850
(87) International publication number: WO 2014/087028

(56) References cited:
- EP-A2- 2 065 213
- DE-A1- 19 928 848
- JP-A- H0 663 786
- JP-A- 2008 023 571
- US-A1- 2003 222 057
- US-A1- 2010 236 997

## Description

### TECHNICAL FIELD

The present invention is applicable to the manufacturing of security paper, specifically paper currency.

### BACKGROUND OF THE INVENTION

Paper currency is produced in the first place in coil format. Even though paper currency normally incorporates watermarks in the shape of figures, reference watermarks for each sheet of paper currency, security elements, etc., in this first step in the manufacturing process, the paper currency is not printed.

The security elements are added in a subsequent step when the paper currency is still in coil format.

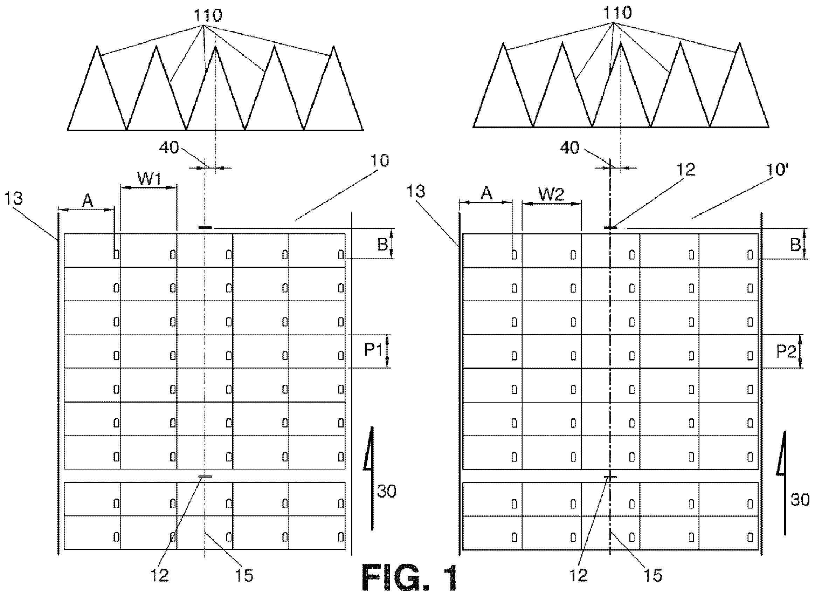

After completing this step, the paper currency is cut into relatively large sheets, containing a specific number of notes per sheet. As shown in Figure 1, each sheet may contain thirty-five notes distributed in seven rows of five notes each. Other distributions are also possible.

After cutting the sheets, they pass to the printing, trimming and packaging process, where the notes are finished and ready for the final quality control process.

In certain countries, notes require the opening of a hole or window of a specific size and shape in each note for the subsequent incorporation of a holographic film covering said hole, contributing a security element to the same.

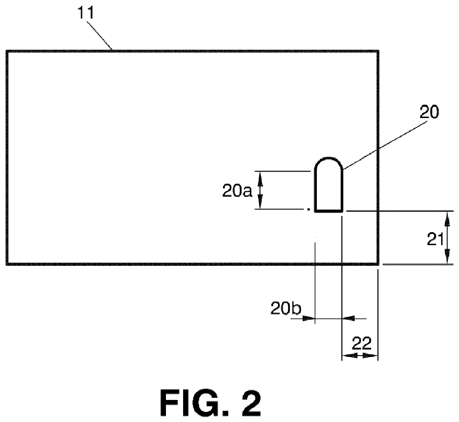

Figure 2 shows an example of the shape of a window 20 in a note 11, and Figure 1 shows the position of said window in each note. This position of the windows in each note is defined by two distances:
- a first distance A defines the transverse position of the window in relation to the left edge 13 of the band of the paper currency.
- A second distance B defines the longitudinal position of the window in relation to a reference mark 12 in the forward direction of the paper. This longitudinal reference mark is a watermark generated in the paper currency during the manufacturing process thereof or a perforated mark with reference to said watermark. Usually, there is one reference mark per sheet.

Nowadays, the equipment intended for the opening of these windows is based on rotary punch and die technology. Specifically, the equipment consists of a pair of cylinders, one of which comprises a series of punches, while the other comprises a series of dies. The band of paper passes through the two rollers, so when punch and die coincide (male-female), the window is cut in the note. The problem with this technology is that, with the passage of time, the punches lose their properties and fail to cut property (for example, they leave pieces uncut). In order to change the defective punch, the machine must come to a full stop, which requires substantial downtime and a significant loss of paper currency. In addition, the entire row of the punch that is not cutting properly needs to be discarded, which ends up being expensive because paper currency is very expensive. In addition, if the geometry of the window changes, all of the punches must be changed. The same occurs if the size of the paper changes. On the other hand, adjusting these purely mechanical tools is difficult, and in addition, they are subject to deterioration, making their useful lives relatively short.

In some cases, such as European patent document EP-2305488-A1, a laser system is used, which has a series of laser heads to make micro-perforations according to a specific pattern in a printed sheet, preferably paper currency or any other type of security paper. In addition, the system includes a suction unit to maintain the printed paper against a surface during the laser perforation process to avoid imprecisions in the micro-perforations due to possible waves or wrinkles in the paper. The laser system described in said document is not suitable to carry out a continuous and clean cut in the paper because it only makes point micro-perforations. On the other hand, the suction system proposed would be inadequate for the evacuation of pieces or windows of paper currency, because it is intended for the suction of the burned paper currency remains generated during the micro-perforations. EP 2065213 A2 (basis for the preamble of claim 1) discloses a laser system for the generation of windows in security paper.

### DESCRIPTION OF THE INVENTION

The invention relates to a laser system for the generation of a window in security paper according to claim 1. Preferred embodiments of the laser system are defined in the dependent claims.

With the laser system of the invention and the laser control means acting on the laser cutting means, a continuous and clean cut is made in the security paper, generating a window - not a series of micro-perforations - which is also suctioned by the suction means located exactly below the security paper in the cutting area.

Said security paper is, preferably, paper currency.

Said laser cutting means comprise at least one laser head and one scanner per each laser head, wherein the laser control means act by controlling the size of the spot or area of the security paper illuminated by the laser, the focal distance and diameter of the laser before focusing. Preferably, the laser head has a power of at least 200 W. Said spot size is, preferably, between 0.15 mm and 0.30 mm, 0.2 mm being the preferred spot size. In its preferred embodiment, the focal distance is 200 mm, and the preferred size of the ray before focusing is 17 mm in diameter.

The laser system of the invention preferably includes transverse support in front and behind the cutting area to support the security paper currency, thus maintaining the paper stable against the vacuum generated in the lower part by the suction means for the efficient evacuation of the windows or cut security paper pieces. These transverse supports are preferably made from scratch-resistant materials.

With the same objective of maintaining the security paper stable, each suction mouth can also comprise grooved support surfaces, said grooved support surfaces being located in both sides of each suction mouth in the longitudinal direction. Said grooves are preferably inclined towards the forward direction of the security paper.

In order to help eliminate the paper windows cut by the laser cutting means, the laser system of the invention preferably also comprises blowing means that comprise at least one blowing tube to blow the security paper window after the cut, wherein at least one of said blowing tubes is located along said path of the security paper immediately after the laser cutting means in the forward direction of the security paper. These blowing means are preferably located above the security paper.

With the purpose of being aware of possible deviations of the security paper along its path, the laser system of the invention comprises a plurality of sensors - optical - located in the path of the security paper before the cutting area.

A first sensor of said plurality of sensors is configured to detect an edge of the security paper, thus providing said first sensor with information about the transverse deviation of the security paper.

A second sensor of said plurality of sensors is configured to detect a reference mark arranged along the security paper, thus providing said second sensor with information about the longitudinal deviation of the security paper.

In order to better control the advance of the security paper, the laser system can also comprise a high-resolution pulse generator.

According to a preferred embodiment of the invention, the laser system comprises a smoke aspirator in the cutting area.

### BRIEF DESCRIPTION OF THE DRAWINGS

In order to supplement the description and with the purpose of aiding a better comprehension of the characteristics of the invention, according to an example of a practical embodiment thereof, a set of figures representing the following in an illustrative rather than limitative manner is attached as an integral part of the description.
Figure 1 shows the positioning between the sheets of paper currency and the laser heads of the invention schematically.
Figure 2 shows a note, with the size and position of the window.
Figure 3 shows a plant and elevational view of the laser system of the invention.
Figure 4 shows an augmented view of the cutting area of the paper currency, showing the design of the suction mouths and the blowing tubes in detail.

### DESCRIPTION OF A PREFERRED EMBODIMENT

Figure 1 shows two bands of paper currency 10, 10', each one with thirty-five notes 11 distributed in seven rows of five notes 11 each. In the band of paper currency 10, the notes 11 are of a first type, with a size W1=133 mm wide and P1 long. In the band of paper currency 10', the notes are of a second type, with a size W2=140 mm wide and P2 long.

In both cases, each note 11 has to have a window 20 made. Figure 2 shows a preferred example of the size (height 20a and width 20b) and positioning of the window 20 in the note 11: at a height 21 from the lower edge of the note 11 and at a distance 22 from the right edge of the note.

In its preferred embodiment, the laser system of the invention comprises five laser heads 110, represented in Figure 1 in a forward position in the forward direction (shown with arrow 30) of the band of paper currency.

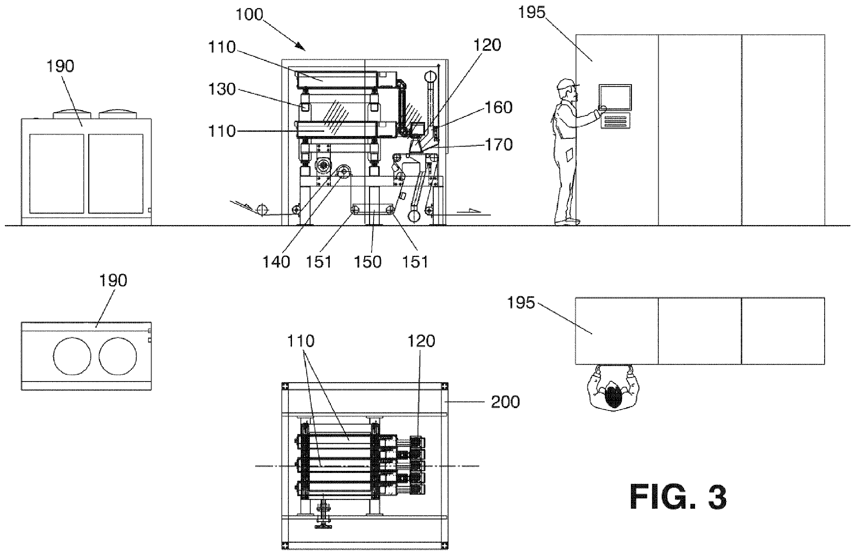

Figure 3 shows a preferred embodiment of the laser system developed to generate windows 20 in paper currency 10, 10'. However, this system also allows generating windows with other geometries.

In this preferred embodiment, the system is composed by the elements indicated below.

The laser system of the invention includes the set of laser heads 110 to make the cut in the paper currency 10, 10' and generate the windows 20. These laser heads have power above 200 W, because they do not cut appropriately with lower power (100 W or 150 W), and the cleanliness of the cut in the paper is important. Working with a 250 W laser is also possible. On the other hand, the 200 W (or 250 W) laser has a lot of power and may burn the paper currency, due to which defining the spot or area of the paper illuminated by the laser is important because, if the spot is too large, the cut will not be clean. The spot has a size preferably between 0.15 and 0.30 mm, the 0.2 mm spot being the preferred size.

The system arranges five laser heads at two heights, but aligned with each other, each laser head ending in a scanner 120; the five scanners 120 are at the same height and aligned with a spacing of 140 mm each, which generate the corresponding windows in each row of the paper currency. There is a series of mirrors between each laser head 110 and its scanner 120, which redirects the beam emitted by the laser head towards the scanner 120.

The laser heads 110 and the scanners 120 are also controlled by a laser control system that adjusts the intensity and focalization of the ray to produce a clean and precise cutting edge in each window 20 cut.

This set of laser heads 110 is supported on frames 130. The frame is provided with a spindle-based device and a reducer that allows the adjustment of a decentering distance 40 of the laser heads 110 in relation to a center 15 of the band of paper currency 10, 10' to obtain a window in the field of action of each laser head for the different note format configurations.

The scanner 120 needs to recognize the position of the windows in the forward direction of the paper currency and in the transverse direction of the advance very precisely. To achieve this, the laser system also comprises a high-resolution encoder, two optical detectors:
- a first detector detecting the edge 13 of the paper currency and is capable of determining its deviation (distance A in Figure 1), and a second detector detecting a reference mark 12 arranged between two consecutive sheets (distance B).

The information provided by these first and second detectors is transmitted to the laser control system, which controls each scanner 120 so it is able to correct the position of the laser beam and make the window with the degree of precision indicated in the specifications.

In its preferred embodiment, the laser system also comprises:
- A band centerer 150 comprising two rollers 151 mounted on a pivoting frame. The objective is to keep the band of paper in a stable transverse position within a tolerance of +/-0.2 mm. In addition, the first detector to detect the edge of the paper is located behind the second roller.
- A smoke aspirator 160: to suction the smoke generated during the cut, since the process of generating windows with a laser implies cutting the contour of the window with heat and combustion. The system incorporates individualized protective elements for each laser head 110 with a vacuum system to evacuate this smoke from the cutting area.
- A confetti blower: the elimination of the cut paper portions - also known as confetti - by the laser heads 110 must be carried out stably and efficiently. The system includes air-blowing tubes 170 in the upper part of the band of paper to push the confetti downwards (natural place of evacuation), collaborating with the force of gravity in the lowering process thereof.
- A confetti aspirator: given the importance of an efficient evacuation of confetti, the system includes suction mouths 180, which are specially designed for the suction of confetti by the lower part of the band of paper. There is one suction mouth per window, and each mouth may be positioned in width to adjust to the position of the windows in the different note formats. The mouths include a firm support in front and behind the suction point and lateral lips specially designed to maintain the paper stable against the vacuum generated in the lower part that is necessary for the efficient evacuation of the confetti towards a storage device.

These last components of the system - blowing tubes 170 and suction mouths 180 - are important, because when the laser is used to make the cut, the cut window is still part of the band of paper (during the punching, the punch exceeds the position of the paper for the cut so the window cut remains on the die). Therefore, securing the extraction of the cut window (from the confetti) is important.

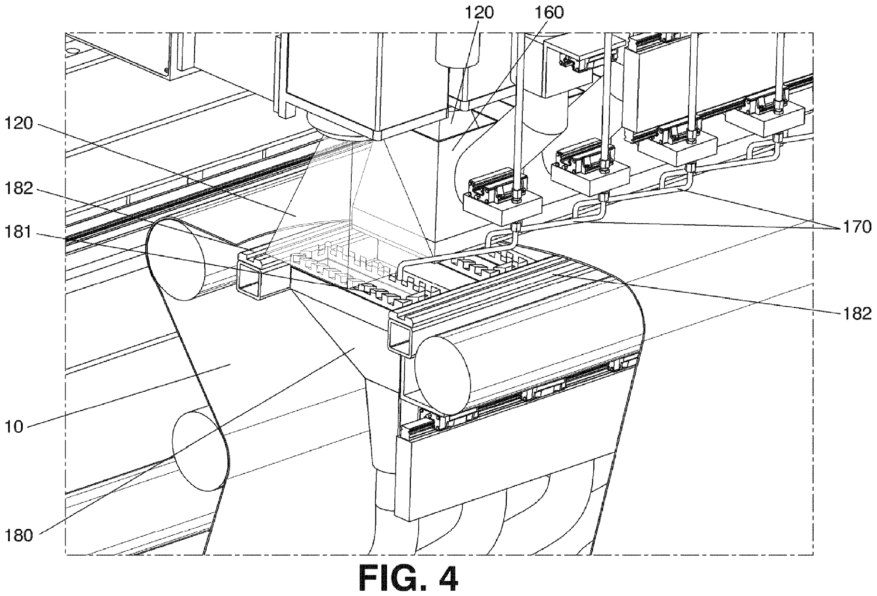

In order to achieve the foregoing, the system of the invention also uses a vacuum system. This vacuum must be applied in the cutting area where the window is made. To carry this out, and as shown in Figure 4, a first support surface 181 is included per window 20 to be cut, against which the paper currency 10 rests in the cutting area where the window 20 is to be cut. Each one of these first support surfaces 181 is larger than the corresponding window 20 in order to absorb deviations in the position, size or geometry of the window. Each suction mouth 180 making the vacuum is located under each support surface 181. These first longitudinal support surfaces 181 are not continuous but are grooved to prevent the vacuum from being too strong to stop the paper and leave marks (it should be noted that the paper currency does not stop during any of the operations). The grooves have an inclination preferably oriented towards the forward position of the band of paper to further reduce the marks on the paper. Second transverse support surfaces 182 are also included so that in the cutting and suction area, the paper currency acts as a flat surface. These transverse bands or supports are preferably made from a specific material to prevent scratching or leaving marks in the paper currency, which in the present case is Teflon^{®}. These second transverse support surfaces 182 are placed in front and behind the cutting area, in the forward direction of the paper currency and are provided with a degree of vacuum.

In order to further improve the extraction through the upper part, we have the confetti-blowing tubes 170, which favor the suction through the lower part.

The system preferably includes a liquid refrigeration circuit 190 to refrigerate the laser heads in order for them to operate correctly. The function of this refrigeration circuit is to reduce the temperature of the water coming from the lasers and to repump it to the same with a lower temperature.

In addition, the system includes electrical closets 195 that contain the control, power and parameterization devices intended to control all the elements that form part of the laser system for opening windows.

The four sides of the system are covered with an aluminum structure 200 with sliding methacrylate panels for protection purposes, provided with the security elements necessary to ensure that the laser system does not harm the operating personnel of the machine.

The laser system described has been designed based on the specifications indicated below:
- the opening of five windows maximum in the width of the band of paper currency;
- size of each window: 54 mm perimeter at the maximum speed;
- advance speed of the band of paper 140 m/min;
- material of the paper currency (100% cotton); weight range: 60-120 GSM;
- tolerance of the positioning of individual windows in the longitudinal direction, distance B=+/-1.5 mm.
- tolerance of the positioning of individual windows in the transverse direction, distance A=+/-1 mm.

Opening a larger number of windows, for example six, is also possible by making two windows with a laser at a reduced speed (50%).

The laser system of the invention guarantees a perfect opening of the windows without errors with a maintenance-free interval of 20,000 working hours. This dramatically minimizes the downtime of the machine and paper currency losses originated by said downtime.

In addition, the laser system offers other advantages regarding the traditional mechanical cutting system, such as:
- very superior flexibility for changes in note format;
- very superior flexibility for changes in the geometrical shape of the window;
- superior positioning precision;
- remarkably lower sonority level.

In this text, the word "comprises" and its variants (such as "comprising", etc.) should not be interpreted in an excluding manner, that is to say, they do not exclude the possibility of the description including other elements, steps, etc.

Furthermore, the invention is not limited to the specific embodiments described, but it also covers, for example, the variants that could be made by an average expert in the art (for example, in terms of the selection of materials, sizes, components, configuration, etc.), within the scope of the appended claims.

## Claims

1. Laser system for the generation of windows (20) in security paper (10, 10') that comprises:
- guiding and transporting means (140, 150, 151) of the security paper along a path through the interior of said laser system;
- laser cutting means along said path of the security paper (10, 10'); and
- suction means comprising at least one suction mouth (180), located along said path of the security paper (10, 10');
- laser control means configured so said laser cutting means generate the window (20) in the security paper (10, 10') by means of a continuous cut according to a pre-established pattern and a pre-established cutting area; said suction means being located below the security paper (10, 10') below said cutting area to suction the window cut from the security paper after the cut carried out by the laser cutting means;
**characterized in that**
said laser cutting means comprise at least one laser head (110) and one scanner (120) per each laser head (110), and **in that** the system also comprises a high-resolution encoder and a plurality of optical sensors located in the path of the security paper (10, 10') before the cutting area, said plurality of sensors providing information about possible deviations of the security paper along the path;
wherein a first sensor of said plurality of sensors is configured to detect an edge (13) of the security paper (10, 10'), said first sensor providing information about the transverse deviation of the security paper; and
a second sensor of said plurality of sensors is configured to detect a reference mark (12) arranged along the security paper (10, 10'), said second sensor providing information about the longitudinal deviation of the security paper.

2. Laser system according to claim 1, which also comprises blowing means comprising at least one blowing tube (170) to blow the window (20) of the security paper after the cut, at least one said blowing tube (170) being located along said path of the security paper (10, 10') immediately after the laser cutting means in the forward direction of the security paper (10, 10').

3. Laser system according to claim 2, wherein said blowing means are located above the security paper (10, 10').

4. Laser system according to any one of the claims 1-3, wherein at least one said laser head (110) has a power of at least 200 W.

5. Laser system according to any one of the claims 1-4, which also comprises a pulse generator to control the advance of the security paper.

6. Laser system according to any one of the claims 1-5, which also comprises transverse supports (182) in front and behind the cutting area to support the security paper (10, 10').

7. Laser system according to any one of the claims 1-6, wherein said transverse supports (182) are made from an anti-scratch material.

8. Laser system according to any one of the claims 1-7, wherein each suction mouth also comprises grooved support surfaces (181).

9. Laser system according to claim 8, wherein said grooves are inclined in the forward direction of the security paper (10, 10').

10. Laser system according to any one of the claims 1-9, which also comprises a smoke aspirator (160) in the cutting area.

## Patentansprüche

1. . Lasersystem zum Erzeugen von Fenstern (20) in Sicherheitspapier (10, 10'), umfassend:
- Führungs- und Transportmittel (140, 150, 151) für das Sicherheitspapier entlang eines Pfades durch das Innere des Lasersystems;
- Laserschneidmittel entlang des Pfades des Sicherheitspapiers (10, 10'); und
- Saugmittel mit wenigstens einer Saugöffnung (180), die entlang des Pfades des Sicherheitspapiers (10, 10') angeordnet sind;
- Lasersteuermittel, die so konfiguriert sind, dass die Laserschneidmittel das Fenster (20) in dem Sicherheitspapier (10, 10') mittels eines kontinuierlichen Schnitts nach einem vorbestimmten Muster und einem vorbestimmten Schneidbereich erzeugen; wobei die Saugmittel unterhalb des Sicherheitspapiers (10, 10') unterhalb des Schneidbereichs angeordnet sind, um das aus dem Sicherheitspapier geschnittene Fenster nach dem von den Laserschneidmitteln ausgeführten Schnitt abzusaugen;
**dadurch gekennzeichnet, dass**
die Laserschneidmittel wenigstens einen Laserkopf (110) und einen Scanner (120) für jeden Laserkopf (110) umfassen, und dass
das System ferner einen hochauflösenden Codierer und eine Vielzahl von optischen Sensoren umfasst, die sich auf dem Pfad des Sicherheitspapiers (10, 10') vor dem Schneidbereich befinden, wobei die Vielzahl von Sensoren Informationen über mögliche Abweichungen des Sicherheitspapiers entlang des Pfades liefern;
wobei ein erster Sensor der Vielzahl von Sensoren dazu konfiguriert ist, eine Kante (13) des Sicherheitspapiers (10, 10') zu erfassen, wobei der erste Sensor Informationen über die transversale Abweichung des Sicherheitspapiers liefert; und
wobei ein zweiter Sensor der Vielzahl von Sensoren dazu konfiguriert ist, eine Referenzmarkierung (12) zu erfassen, die entlang des Sicherheitspapiers (10, 10') angeordnet ist, wobei der zweite Sensor Informationen über die Längsabweichung des Sicherheitspapiers liefert.

2. . Lasersystem nach Anspruch 1, das ferner Blasmittel mit wenigstens einem Blasrohr (170) umfasst, um das Fensters (20) des Sicherheitspapiers nach dem Schnitt auszublasen, wobei das wenigstens eine Blasrohr (170) entlang des Pfades des Sicherheitspapiers (10, 10') unmittelbar nach den Laserschneidmitteln in der Vorwärtsrichtung des Sicherheitspapiers (10, 10') angeordnet ist.

3. . Lasersystem nach Anspruch 2, wobei die Blasmittel über dem Sicherheitspapier (10, 10') angeordnet sind.

4. . Lasersystem nach einem der Ansprüche 1-3, bei dem der wenigstens eine Laserkopf (110) eine Leistung von wenigstens 200W aufweist.

5. . Lasersystem nach einem der Ansprüche 1-4, ferner umfassend einen Impulsgeber zur Steuerung des Vorschubs des Sicherheitspapiers.

6. . Lasersystem nach einem der Ansprüche 1-5, ferner umfassend Querstützen (182) vor und hinter dem Schneidbereich zum Abstützen des Sicherheitspapiers (10, 10').

7. . Lasersystem nach einem der Ansprüche 1-6, wobei die Querstützen (182) aus einem kratzfesten Material bestehen.

8. . Lasersystem nach einem der Ansprüche 1-7, wobei jede Saugöffnung gerillte Stützflächen (181) aufweist.

9. . Lasersystem nach Anspruch 8, wobei die Rillen in Vorwärtsrichtung des Sicherheitspapiers (10, 10') geneigt sind.

10. . Lasersystem nach einem der Ansprüche 1-9, ferner umfassend einen Rauchabsauger (160) im Schneidbereich.

## Revendications

1. Système laser pour la création de fenêtres (20) dans du papier de sécurité (10, 10') qui comprend :
- des moyens de guidage et de transport (140, 150, 151) du papier de sécurité le long d'un trajet à travers l'intérieur dudit système laser ;
- des moyens de découpe au laser le long dudit trajet du papier de sécurité (10, 10') ; et
- des moyens d'aspiration comprenant au moins une bouche d'aspiration (180), située le long dudit trajet du papier de sécurité (10, 10') ;
- des moyens de commande de laser configurés pour que lesdits moyens de découpe au laser créent la fenêtre (20) dans le papier de sécurité (10, 10') au moyen d'une découpe continue selon un motif préétabli et une zone de découpe préétablie ; lesdits moyens d'aspiration étant situés sous le papier de sécurité (10, 10') en dessous de ladite zone de découpe pour aspirer la fenêtre découpée du papier de sécurité après que la découpe a été effectuée par les moyens de découpe au laser ;
**caractérisé en ce que**
lesdits moyens de découpe au laser comprennent au moins une tête laser (110) et un scanner (120) pour chaque tête laser (110), et **en ce que**
le système comprend également un codeur haute résolution et une pluralité de capteurs optiques situés dans le trajet du papier de sécurité (10, 10') avant la zone de découpe, ladite pluralité de capteurs fournissant des informations sur de possibles déviations du papier de sécurité le long du trajet ;
un premier capteur de ladite pluralité de capteurs étant configuré pour détecter un bord (13) du papier de sécurité (10, 10'), ledit premier capteur fournissant des informations sur la déviation transversale du papier de sécurité ; et
un deuxième capteur de ladite pluralité de capteurs est configuré pour détecter une marque de référence (12) disposée le long du papier de sécurité (10, 10'), ledit deuxième capteur fournissant des informations sur la déviation longitudinale du papier de sécurité.

2. Système laser selon la revendication 1, qui comprend également des moyens de soufflage comprenant au moins un tube de soufflage (170) pour souffler la fenêtre (20) du papier de sécurité après la découpe, au moins ledit un tube de soufflage (170) étant situé le long dudit trajet du papier de sécurité (10, 10') immédiatement après les moyens de découpe au laser dans la direction d'avancement du papier de sécurité (10, 10').

3. Système laser selon la revendication 2, dans lequel lesdits moyens de soufflage sont situés au-dessus du papier de sécurité (10, 10').

4. Système laser selon l'une quelconque des revendications 1-3, dans lequel ladite au moins une tête laser (110) a une puissance d'au moins 200 W.

5. Système laser selon l'une quelconque des revendications 1-4, qui comprend également un générateur d'impulsions pour contrôler l'avancement du papier de sécurité.

6. Système laser selon l'une quelconque des revendications 1-5, qui comprend également des supports transversaux (182) à l'avant et à l'arrière de la zone de découpe pour supporter le papier de sécurité (10, 10').

7. Système laser selon l'une quelconque des revendications 1-6, dans lequel lesdits supports transversaux (182) sont réalisés dans un matériau anti-rayures.

8. Système laser selon l'une quelconque des revendications 1-7, dans lequel chaque bouche d'aspiration comprend également des surfaces support rainurées (181).

9. Système laser selon la revendication 8, dans lequel lesdites rainures sont inclinées dans la direction d'avancement du papier de sécurité (10, 10').

10. Système laser selon l'une quelconque des revendications 1-9, qui comprend également un aspirateur de fumée (160) dans la zone de découpe.
